# EUROPÄISCHE PATENTSCHRIFT

(11) **EP 1 407 308 B1**
(45) Veröffentlichungstag und Bekanntmachung des Hinweises auf die Patenterteilung: **07.12.2005**
(21) Anmeldenummer: 02754671.2
(22) Anmeldetag: 13.06.2002
(51) Int. Cl.: G02B 21/02, G02B 21/06, G02B 21/36, G02B 21/24, G02B 9/04

(54) **MIKROSKOPOBJEKTIV UND VERWENDUNG EINES SOLCHEN MIKROSKOPOBJEKTIVS BEI EINEM MIKROSKOP**
MICROSCOPE LENS AND THE USE OF A MICROSCOPE LENS OF THIS TYPE IN A MICROSCOPE
OBJECTIF DE MICROSCOPE ET SON UTILISATION DANS UN MICROSCOPE

(30) Priorität: 19.07.2001 DE 10135320
(43) Veröffentlichungstag der Anmeldung: 14.04.2004
(73) Patentinhaber: Carl Zeiss SMS GmbH, 07745 Jena (DE)
(72) Erfinder: ENGEL, Thomas, 99102 Erfurt (DE)
(74) Vertreter: Grimm, Christian
(86) Internationale Anmeldenummer: PCT/EP2002/006522
(87) Internationale Veröffentlichungsnummer: WO 2003/009042

(56) Entgegenhaltungen:
- DE-A- 19 647 510
- DE-A- 19 923 122
- US-A- 5 943 122
- PATENT ABSTRACTS OF JAPAN vol. 1997, no. 08, 29. August 1997 (1997-08-29) & JP 09 102899 A (SCALA KK), 15. April 1997 (1997-04-15)

## Beschreibung

Die Erfindung bezieht sich auf ein Mikroskopobjektiv mit eiriem Gehäuse, an dessen Oberseite ein Anschraubgewinde vorgesehen ist, mit dem das Mikroskopobjektiv an einen Objektivhalter eines Mikroskops anschraubbar ist, und eine Lichteintrittsöffnung aufweist, und weiter mit einem im Gehäuse angeordneten Optiksystem. Die Erfindung bezieht sich femer auf die Verwendung eines solchen Mikroskopobjektivs bei einem Mikroskop.

Ein Mikroskop weist meistens mehrere Mikroskopobjektive auf, die alle mit dem Objektivhalter (z.B. ein Objektivrevolver) verbunden sind, mit dem das gewünschte Mikroskopobjektiv in Arbeitsstellung gebracht werden kann. Da bei mikroskopischen Untersuchungen der Beobachtungsort auf der Probe festzulegen bzw. zu kontrollieren ist, weisen die Mikroskopobjektive üblicher Weise unterschiedliche Vergrößerungsfaktoren auf, so daß vor einer hochvergrößemden Beobachtung zuerst mittels eines Mikroskopobjektivs mit geringerer Vergrößerung festgestellt wird, ob die Probe richtig positioniert ist.

Die Positionierung der Probe ist besonders bei mikroskopischen Beobachtungen wichtig, bei denen am Systeme kein visueller (bzw. binokularer) Einblick mehr vorhanden ist, wie dies häufig bei Mikroskopen zur Inspektion von Masken, die zur Fertigung von Halbleitern eingesetzt werden; der Fall ist.

Eine solche Inspektion wird darüber hinaus bevorzugt mit UV-Licht (z.B. 193 nm, 157 nm) durchgeführt, während die Übersichtsaufnahme mit Licht größerer Wellenlänge erfolgt, so daß eine Strahlteilung im Strahlverlauf nach dem Objektivrevolver notwendig ist, was zu einem aufwendigen und komplizierten optischen Aufbau führt.

Des weiteren arbeiten die gängigen Autofokussierungseinrichtungen bei Wellenlängen von z.B. 600-800 nm, so daß auch aus diesem Grund eine Strahlteilung nach dem Objektivrevolver durchgeführt wird, die den optischen Aufbau des Mikroskops verkompliziert.

Die DE 196 47 510 A1 beschreibt ein Mikromeßsystem mit mehreren Mikromeßköpfen, die alle an einen Personalcomputer über eine darin eingebaute Bildaufnahmeeinheit angeschlossen sind. Jeder Mikromeßkopf umfaßt eine Bildaufnahmevorrichtung, ein Mikroskopobjektiv und eine Beleuchtung, die in einem rohrförmigen Gehäuse angeordnet ist. Von diesem rohrförmigen Gehäuse führt lediglich ein Anschlußkabel zum Personalcomputer, um die vom Mikromeßkopf erfaßten Bilddaten zum Personalcomputer zu übertragen.

Ausgehend hiervon ist es Aufgabe der vorliegenden Erfindung, ein Mikroskopobjektiv der eingangs genannten Art so weiterzubilden, daß eine Vereinfachung des optischen Aufbaus des Mikroskops, in dem das Mikroskopobjektiv eingesetzt wird, ermöglicht wird.

Erfindungsgemäß wird diese Aufgabe bei dem Mikroskopobjektiv der eingangs genannten Art dadurch gelöst, daß ein Bilderfassungselement vorgesehen ist und daß mittels des Optiksystems über die Lichteintrittsöffnung eintretendes Licht auf das Bilderfassungselement gelenkt und nicht in einen dem Mikroskopobjektiv nachfolgenden Strahlengang des Mikroskops eingekoppelt wird. Aufgrund des Bilderfassungselements und des Optiksystems ist eine Strahlteilung im Strahlengang des Mikroskops nach dem Objektivhalter nicht mehr nötig, da das Licht auf das Bilderfassungselement trifft und nicht mehr in den Strahlengang eingekoppelt wird.

Es ist somit in einfacher Art und Weise möglich, das gewünschte Übersichtsbild aufzunehmen, wobei die Größe des Übersichtsbildes im wesentlichen von dem Vergrößerungsfaktor des Optiksystems abhängt. Nach Aufnahme des Übersichtsbildes kann die Probe entsprechend positioniert werden und dann kann mittels des Objektivhalters ein an diesem befestigtes Vergrößerungsobjektiv mit der gewünschten Vergrößerung in Arbeitsstellung gebracht werden.

Ferner kann bei Verwendung des erfindungsgemäßen Mikroskopobjektivs in einem Mikroskop eine Fokussierung gleich bei der Erfassung des Übersichtsbildes durchgeführt werden, so daß bei nachfolgendem Einsatz eines anderen Mikroskopobjektivs gleich ein scharfes Bild erzeugbar ist.

Das Bilderfassungselement kann insbesondere mit dem Mikroskopobjektivgehäuse verbunden sein. Dadurch ist die optimale Anordnung der Bilderfassungselemente auch bei Bewegen des Mikroskopobjektivs gewährleistet.

Das erfindungsgemäße Mikroskopobjektiv kann bevorzugt bei Mikroskopen bzw. Inspektionssystemen für die Halbleiterindustrie und bei Mikroskopen bzw. Inspektionssystemen, die zur Untersuchung UV-Licht (z.B. 365, 266, 248, 213, 211, 193, 157 nm) verwenden, eingesetzt werden.

In einer bevorzugten Weiterbildung des erfindungsgemäßen Mikroskopobjektivs ist das Bilderfassungselement innerhalb des Gehäuses angeordnet. Dadurch ist das Mikroskopobjektiv einerseits sehr kompakt und andererseits ist auch ein effektiver Schutz des Bilderfassungselements, z.B. gegen Verschmutzungen, in einfacher Art und Weise realisiert.

Insbesondere ist es auch möglich, daß das Gehäuse des erfindungsgemäßen Mikroskopobjektivs noch eine Lichtaustrittsöffnung umfaßt und daß das Bilderfassungselement außerhalb des Gehäuses angeordnet ist. Vorteilhafterweise kann im Gehäuse ein Umlenkelement (z.B. Spiegel) so vorgesehen sein, daß das eingekoppelte Licht durch die in diesem Fall in der Seitenwandung vorgesehene Lichtaustrittsöffnung gelenkt wird. Daher kann das Bilderfassungselement seitlich des Gehäuses angeordnet sein, wodurch die Objektivlänge sehr klein sein kann.

Auch kann zwischen dem Gehäuse und dem Bilderfassungselement eine Optikeinrichtung vorgesehen sein, mit der beispielsweise gewünschte Korrekturen durchgeführt werden können. Mit dieser Anordnung des Bilderfassungselementes kann somit ein längerer Strahlengang vorgesehen werden, ohne daß die Objektivlänge vergrößert werden muß.

Das Bilderfassungselement kann auch so außen am Gehäuse befestigt sein, daß es die Lichtaustrittsöffnung abdeckt. Insbesondere kann die Lichtaustrittsöffnung durch ein Anschraubgewinde des Mikroskopobjektivs hindurchgehen, wobei das Bilderfassungselement dann auf dem Anschraubgewinde angebracht sein kann. Da das Bilderfassungselement außen am Gehäuse angebracht ist, ist die Wartung und insbesondere ein möglicherweise notwendiges Auswechseln des Bilderfassungselements sehr einfach durchzuführen.

Bei einer bevorzugten Weiterbildung des erfindungsgemäßen Mikroskopobjektivs ist außerhalb des Gehäuses eine Auswerteeinrichtung angeordnet, die mit vom Bilderfassungselement erzeugten elektrischen Bildsignalen beaufschlagbar ist. Da die Auswerteeinrichtung außerhalb des Gehäuses angeordnet ist, kann der gesamte Innenraum des Gehäuses für das Optiksystem und das Bilderfassungselement genutzt werden, wodurch der optische Aufbau leichter realisiert werden kann. Dies ist insbesondere dann von Vorteil, wenn die Längsabmessungen des Mikroskopobjektivs fest vorgegeben ist, z.B. damit das Mikroskopobjektiv in schon vorhandenen Mikroskopen eingesetzt werden kann.

Insbesondere kann die Auswerteeinrichtung bei dem erfindungsgemäßen Mikroskopobjektiv außen am Gehäuse befestigt sein. Damit wird eine räumlich sehr kompakte Realisierung des Bilderfassungssystems (Bilderfassungselement und Auswerteeinrichtung) ermöglicht, wobei das Gehäuse ausreichend Platz für die notwendigen optischen Komponenten aufweist.

Es ist natürlich auch möglich, die Auswerteeinrichtung im Mikroskopgehäuse anzuordnen, wenn dazu ausreichend Platz vorhanden ist. Mit dieser Maßnahme ist dann vorteilhaft die Auswerteeinrichtung aufgrund des Gehäuses mechanisch geschützt.

Bei einer besonders bevorzugten Weiterbildung des erfindungsgemäßen Mikroskopobjektivs weist dieses einen Dunkelfeldkanal auf, über den mit vom Mikroskop, in dem das erfindungsgemäße Mikroskopobjektiv verwendet wird, kommenden Licht die zu untersuchende Probe beleuchtet werden kann. Dadurch ist auch noch in äußerst kompakter Art und Weise eine Beleuchtungsmöglichkeit der zu untersuchenden Probe im erfindungsgemäßen Mikroskopobjektiv realisiert.

Neben der Beleuchtung über den Dunkelfeldkanal kann eine bei Mikroskopen übliche Durchlichtbeleuchtung oder, soweit ausreichend Platz im erfindungsgemäßen Mikroskopobjektiv vorhanden ist, eine Auflichtbeleuchtung eingesetzt werden. Ferner ist es möglich, eine eigene Beleuchtungsquelle vorzusehen, wobei das Licht dieser Beleuchtungsquelle z.B. entweder über eine Lichtleitfaser oder direkt von der Beleuchtungsquelle auf die Probe gerichtet werden kann.

In einer bevorzugten Ausgestaltung des erfindungsgemäßen Mikroskopobjektivs ist im Gehäuse eine Lichtquelle zur Beleuchtung der zu untersuchenden Probe vorgesehen. Eine solche Lichtquelle kann eine Glühbirne, eine Halogenleuchte, ein LED oder eine Laserdiode umfassen. Durch die Anordnung der Lichtquelle innerhalb des Gehäuses, wobei das Beleuchtungslicht bevorzugt durch die Lichteintrittsöffnung und insbesondere über zumindest einen Teil des Optiksystems auf die zu untersuchende Probe gelangt, kann ein äußerst kompaktes Mikroskopobjektiv mit eigener Lichtquelle verwirklicht werden. Auch kann vorteilhaft der verwendete Teil des Optiksystems bzw. das verwendete Optiksystem gleich als Beleuchtungsoptik eingesetzt werden.

Insbesondere kann bei dem erfindungsgemäßen Mikroskopobjektiv das Bilderfassungselement einen CCD-Bildsensor umfassen. Solche CCD-Sensoren sind gängige Optikelemente, die eine äußerst hohe Auflösung bei sehr geringen räumlichen Abmessungen liefern, so daß das Mikroskopobjektiv sehr kompakt realisiert werden kann.

Das Bilderfassungselement kann auch andere elektronische Bildsensoren umfassen, wie z.B. Fotodioden, die z.B. in einer Matrix angeordnet sein können, Quadrantendioden oder positionsempfindliche Detektoren (PSD).

Des weiteren kann beim erfindungsgemäßen Mikroskopobjektiv ein zweites Bilderfassungselement und ein Strahlteiler vorgesehen sein, wobei das über die Lichteintrittsöffnung eintretende Licht in zwei Teilstrahlengänge so aufgeteilt wird, daß beide Bilderfassungselemente beleuchtet werden. Bevorzugt ist dabei zumindest eins der beiden Bilderfassungselemente außerhalb des Gehäuses vorgesehen. Bei dieser Ausgestaltung können vorteilhaft zwei verschiedene Vergrößerungen mittels der beiden Bilderfassungselemente gleichzeitig aufgenommen werden, so daß eine bessere Übersicht über die Positionierung der Probe erhalten werden kann. Als Strahlteiler kann beispielsweise ein semitransparenter Spiegel eingesetzt werden, der ein Teil des auf ihn treffenden Lichtes reflektiert und den anderen Teil hindurchläßt.

Das Optiksystem im erfindungsgemäßen Mikroskopobjektiv und auch die Optikeinrichtung können jeweils refraktive und/oder diffraktive Optikelemente aufweisen. Ferner können auch Linsen mit örtlich variierendem Brechungsindex eingesetzt werden.

Besonders vorteilhaft ist die Verwendung des erfindungsgemäßen Mikroskopobjektiv bei einem Mikroskop mit einem Objektivhalter, einem mit dem Objektivhalter verbundenen Beobachtungsobjektiv und einer dem Objektivhalter nachgeordneten Beobachtungsoptik, in der das über das Beobachtungsobjektiv aufgenommene Probenlicht eingekoppelt wird, wenn mittels des Objektivhalters das Beobachtungsobjektiv in seiner Arbeitsstellung steht, wobei das erfindungsgemäße Mikroskopobjektiv mit dem Objektivhalter verbunden ist und mittels diesem in Arbeitsstellung bringbar ist.

Als Objektivhalter kann ein bekannter Objektivrevolver oder jeder andere Halter eingesetzt werden, der mehrere Objektive haltern und selektiv in Arbeitsstellung bringen kann.

Die Erfindung wird nachfolgend anhand der Zeichnungen im Prinzip beispielshalber noch näher erläutert. Es zeigen:
Fig. 1 eine schematische Ansicht einer ersten Ausführungsform des erfindungsgemäßen Mikroskopobjektivs;
Fig. 2 eine schematische Ansicht einer zweiten Ausführungsform des erfindungsgemäßen Mikroskopobjektivs;
Fig. 3 eine schematische Ansicht einer dritten Ausführungsform des erfindungsgemäßen Mikroskopobjektivs;
Fig. 4 eine schematische Ansicht einer vierten Ausführungsform des erfindungsgemäßen Mikroskopobjektivs;
Fig. 5 eine schematische Ansicht einer fünften Ausführungsform des erfindungsgemäßen Mikroskopobjektivs, und
Fig. 6 eine schematische Ansicht einer sechsten Ausführungsform des erfindungsgemäßen Mikroskopobjektivs.

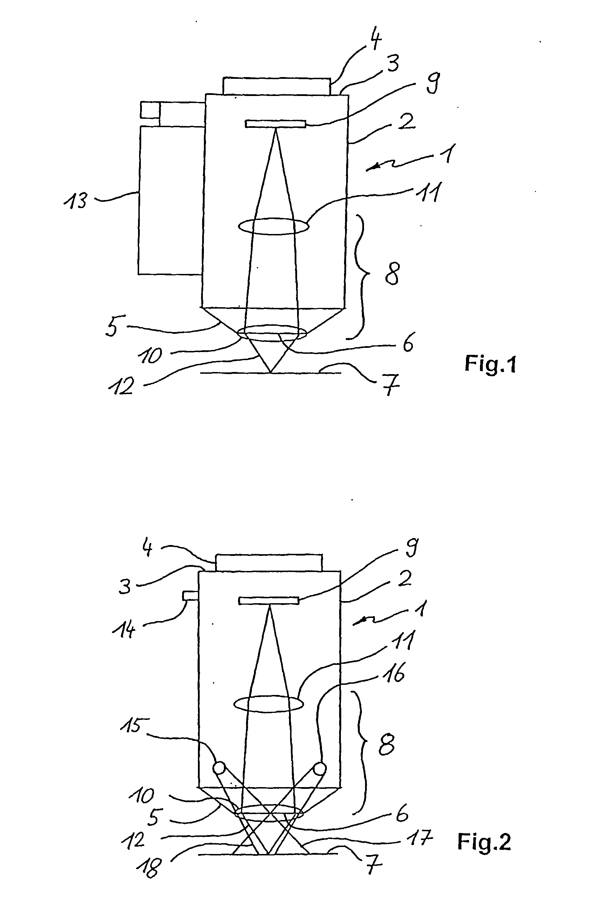

Das in Fig. 1 gezeigte Mikroskopobjektiv 1 umfaßt ein Gehäuse 2, an dessen Oberseite 3 ein Anschraubgewinde 4 vorgesehen ist, mit dem das Mikroskopobjektiv 1 an einen Objektivrevolver (nicht gezeigt) eines Mikroskops (nicht gezeigt) angeschraubt werden kann.

In der in der Oberseite 3 abgewandten Unterseite 5 des Gehäuses 2 ist eine Lichteintrittsöffnung 6 gebildet, durch die das von einer Probe 7 kommende Licht in das Gehäuse 2 eintreten kann. Innerhalb des Gehäuses 2 ist ein abbildendes Optiksystem 8 angeordnet, mit dem ein Probenabschnitt auf ein im Gehäuse befestigtes Bilderfassungselement 9 abgebildet werden kann. Bei der hier gezeigten Ausführungsform wird als Bilderfassungselement 9 ein CCD-Sensor eingesetzt.

In Fig. 1 ist das Optiksystem 8 aus zwei schematisch gezeichneten Linsen 10, 11 gebildet, wobei die Linse 10 genau in der Lichteintrittsöffnung 6 positioniert ist. Ferner ist in Fig. 1 noch beispielhaft ein Strahlenverlauf 12 für einen Punkt der Probe 7 dargestellt.

Außen am Gehäuse 2 ist eine für das Bilderfassungselement 9 notwendige Auswerteelektronik 13 angebracht, wobei die vom Bilderfassungselement 9 erzeugten elektrischen Bildsignale über eine (nicht gezeigte) Verbindung zur Auswertelektronik 13 übertragen werden.

Das erfindungsgemäße Mikroskopobjektiv 1 weist einen Durchmesser von ca. 30 mm und eine Länge von etwa 40 mm auf, wobei die Diagonale des CCD-Sensors 9 ca. 14 mm beträgt.

In Fig. 2 ist eine zweite Ausführungsform des erfindungsgemäßen Mikroskopobjektivs 1 gezeigt, wobei gleiche Elemente mit gleichen Bezugszeichen bezeichnet sind und deren Beschreibung nicht wiederholt wird. Im Unterschied zu der in Fig. 1 gezeigten Ausführungsform ist bei dem Mikroskopobjektiv 1 von Fig. 2 die Auswerteelektronik 13 nicht direkt am Gehäuse 2 befestigt, sondern davon beabstandet angeordnet (nicht gezeigt). Die Auswerteelektronik kann beispielsweise an geeigneter Stelle am Mikroskop, in dem das Mikroskopobjektiv 1 verwendet wird, angebracht sein. Die Verbindung kann über elektrische Leitungen über ein am Gehäuse 2 vorgesehenes Anschlußelement 14 erfolgen, an dem die elektrischen Signale des Bilderfassungselements 9 anliegen.

Weiterhin enthält das Gehäuse 2 noch eine erste und eine zweite Lichtquelle 15, 16, die zur Beleuchtung der zu untersuchenden Probe 7 dienen, wobei die Strahlverläufe 17, 18 des Beleuchtungslichtes schematisch eingezeichnet sind. Bei der in Fig. 2 gezeigten Ausführungsform wird die in der Lichteintrittsöffnung 6 angeordnete Linse 10 des Optiksystems 8 auch gleich bei der Beleuchtung mittels der Lichtquellen 15 und 16 verwendet, so daß eine kompakte Ausbildung des Mikroskopobjektivs 1 gewährleistet werden kann.

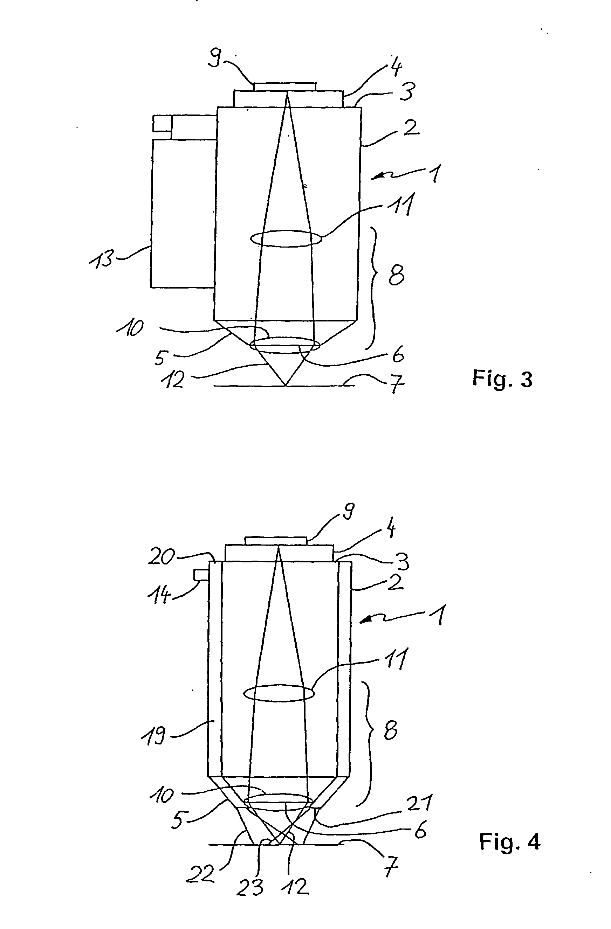

Eine weitere Ausführungsform des erfindungsgemäßen Mikroskopobjektivs ist in Fig. 3 dargestellt, wobei sich diese Ausführungsform von Fig. 1 nur dadurch unterscheidet, daß das Bilderfassungselement 9 außerhalb des Gehäuses 2 auf dem Anschraubgewinde 4 befestigt und eine durch die Oberseite 3 sowie das Anschraubgewinde 4 verlaufende Lichtaustrittsöffnung vorgesehen ist, die zumindest so groß wie der Bildaufnahmebereich des Bilderfassungselements 9 ausgebildet ist. Der restliche Aufbau entspricht dem von Fig. 2, so daß auf die diesbezügliche Beschreibung verwiesen wird.

Da das Bilderfassungselement 9 auf dem am Anschraubgewinde 4 und somit nicht mehr innerhalb des Gehäuses 2 angebracht ist, ist die Herstellung des erfindungsgemäßen Mikroskopobjektivs 1 bezüglich der Anordnung des Bilderfassungselements 9 sehr einfach. So kann das Bilderfassungselement 9 z.B. durch Kleben an dem Anschraubgewinde 4 fixiert werden. Auch ist ein Auswechseln des Bilderfassungselements 9, das beispielsweise dann notwendig wird, wenn das Bilderfassungselement 9 einen Defekt aufweist, aufgrund der Anordnung außerhalb des Gehäuses 2 in vorteilhafter Weise leicht möglich.

Eine vierte Ausführungsform des erfindungsgemäßen Mikroskopobjektivs 1 ist in Fig. 4 dargestellt, wobei bei dieser Ausführungsform die Anordnung des Bilderfassungselements 9 in gleicher Weise wie bei der in Fig. 3 gezeigten Ausführungsform durchgeführt ist und die Auswerteelektronik nicht am Gehäuse 2 befestigt ist, sondern in gleicher Weise wie bei der in Fig. 2 gezeigte Ausführungsform über das Anschlußelement 14, an dem die elektrischen Signale des Bilderfassungselements 9 anliegen, angeschlossen werden kann.

Im Unterschied zu den bisher beschriebenen Ausführungsformen ist bei dem in Fig. 4 gezeigten Mikroskopobjektiv 1 die Beleuchtung der Probe 7 in Art einer bekannten Dunkelfeldbeleuchtung möglich, da ein Dunkelfeldkanal 19 vorgesehen ist, der sich von der Oberseite 3 des Gehäuses 2 bis zur Unterseite 5 erstreckt und einen kreisringförmigen Querschnitt aufweist, so daß er eine kreisringförmige Beleuchtungslichteintrittsöffnung 20 an der Oberseite 3 und eine kreisringförmige Beleuchtungslichtaustrittsfläche 21 an der Unterseite 5 aufweist. Bei der Verwendung des erfindungsgemäßen Mikroskopobjektivs 1 in einem Mikroskop kann über die Beleuchtungslichteintrittsöffnung 20 Licht in den Dunkelfeldkanal 19 eingekoppelt werden, mit dem dann die Probe 7 beleuchtet wird, wie durch die schematisch eingezeichneten Strahlenverläufe 22, 23 ersichtlich ist.

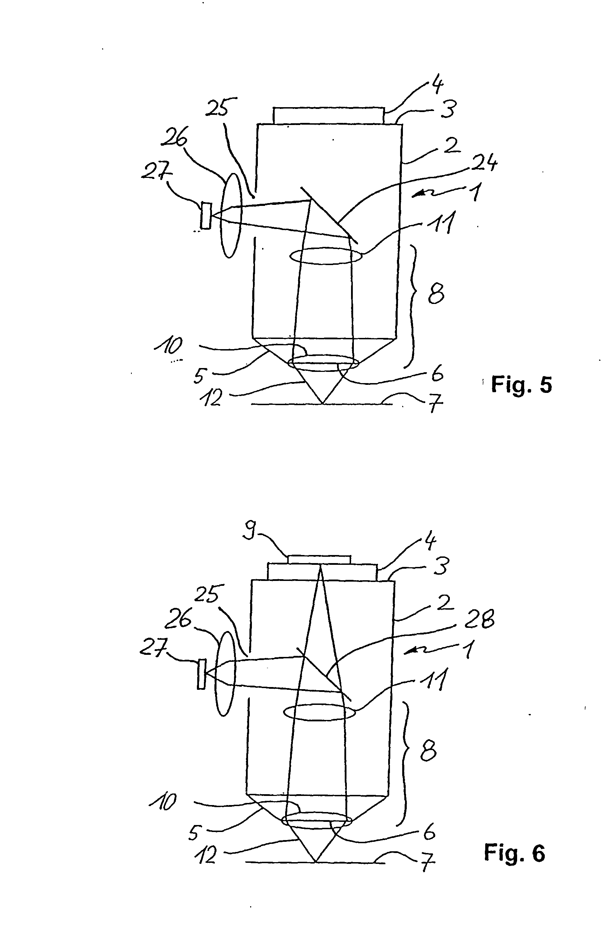

In Fig. 5 ist eine fünfte Ausführungsform des erfindungsgemäßen Mikroskopobjektivs 1 gezeigt, wobei die gleichen Elemente, die auch bei den vorhergehenden Ausführungsformen vorhanden sind, mit den gleichen Bezugszeichen bezeichnet sind und zu ihrer Beschreibung auf die

vorhergehenden Ausführungsformen verwiesen wird. Im Unterschied zu den bisherigen Ausführungsformen ist im Gehäuse 2 der Linse 11 ein Umlenkelement (z.B. Spiegel) 24 angeordnet, das das eintretende Licht um 90° (in Fig. 5 gesehen) nach links umlenkt. In der entsprechenden Stelle in der Seitenwandung des Gehäuses 2 ist eine Lichtaustrittsöffnung 25 vorgesehen, so daß das umgelenkte Licht aus dem Gehäuse austritt. Der Lichtaustrittsöffnung 25 ist eine Optikeinrichtung 26, die schematisch als Linse dargestellt ist, nachgeordnet, wobei die Optikeinrichtung 26 das Licht auf ein Bilderfassungselement 27, das beispielsweise ein CCD-Sensor sein kann, fokussiert.

Die Optikeinrichtung 26 und das Bilderfassungselement 27 können entweder mit dem Gehäuse 2 (bevorzugt mechanisch) koppelt oder auch derart feststehend relativ zum Mikroskop angeordnet sein, daß eine optische Kopplung gegeben ist, wenn das Mikroskopobjektiv 1 in Arbeitsstellung steht (d.h. wenn das Mikroskopobjektiv in Arbeitsstellung steht, trifft das mittels des Umlenkelementes 24 umgelenkte Licht über die Optikeinrichtung 26 auf das Bilderfassungselement 27).

Durch diese Anordnung ist eine kleinere Objektivlänge möglich. Gleichzeitig kann der Strahlengang verlängert werden, so daß beispielsweise mehr optische Elemente im Strahlengang zwischen der Probe 7 und dem Bilderfassungselement 27 vorgesehen werden können. Damit können beispielsweise bessere optische Korrekturen durchgeführt werden und auch die freie Wahl von Brennweite bzw. Abbildungsmaßstab ist dadurch leicht möglich.

In Fig. 6 ist eine Abwandlung der in Fig. 5 gezeigten Ausführungsform dargestellt, bei der statt des Umlenkelementes 24 ein Strahlteiler 28 angeordnet ist, der nur einen Teil des eingekoppelten Lichts, in Fig. 6 gesehen, nach links umlenkt. Der restliche Teil des Lichtes geht durch den Strahlteiler 28 hindurch und trifft auf ein zweites Bilderfassungselement 9, das in gleicher Weise wie bei der in Fig. 3 gezeigten Ausführungsform auf dem Anschraubgewinde 4 befestigt ist (wobei natürlich eine durch die Oberseite 3 und das Anschraubgewinde 4 verlaufende zweite Lichtaustrittsöffnung (nicht eingezeichnet) vorgesehen ist). Bei dieser Ausführungsform ist es vorteilhaft möglich, daß durch die beiden Bilderfassungselemente 9 und 27 gleichzeitig zwei Bilder mit beispielsweise unterschiedlichen Vergrößerungen aufgenommen werden können.

Es ist natürlich auch möglich, daß bei einer Abwandlung der in Fig. 6 gezeigten Ausführungsform das zweite Bilderfassungselement 9 nicht außerhalb, sondern innerhalb des Gehäuses 2 angeordnet ist. Ferner kann die Optikeinrichtung 26, falls ausreichend Platz im Gehäuse 2 vorhanden ist, zum Teil oder auch vollständig innerhalb des Gehäuses angeordnet sein.

Insbesondere ist es bei den in Fig. 5 und 6 gezeigten Ausführungsformen auch möglich, daß die Optikeinrichtung 26 weggelassen wird, wenn das Optiksystem 8 entsprechend ausgebildet ist, wobei bei der Ausführungsform von Fig. 6 natürlich auch noch zwischen dem Strahlteiler 28 und dem zweiten Bilderfassungselement 9 Optikelemente, falls gewünscht, angeordnet sein können.

## Patentansprüche

1. Mikroskopobjektiv (1) mit einem Gehäuse (2), an dessen Oberseite (3) ein Anschraubgewinde (4) vorgesehen ist, mit dem das Mikroskopobjektiv an einen Objektivhalter eines Mikroskops anschraubbar ist, und das eine Lichteintrittsöffnung (6) aufweist, und weiter mit einem im Gehäuse (2) angeordneten Optiksystem (8), **dadurch gekennzeichnet, daß** ein Bilderfassungselement (9; 27) vorgesehen ist und daß mittels des Optiksystems (8) über die Lichteintrittsöffnung (6) eintretendes Licht auf das Bilderfassungselement (9; 27) gelenkt und nicht in einen dem Mikroskopobjektiv (1) nachfolgenden Strahlengang des Mikroskops eingekoppelt wird.

2. Mikroskopobjektiv (1) nach Anspruch 1, **dadurch gekennzeichnet, daß** das Bilderfassungselement (9) innerhalb des Gehäuses (2) angeordnet ist.

3. Mikroskopobjektiv (1) nach Anspruch 1, **dadurch gekennzeichnet, daß** das Gehäuse (2) eine Lichtaustrittsöffnung (25) aufweist und daß das Bilderfassungselement (27) außerhalb des Gehäuses (2) angeordnet ist.

4. Mikroskopobjektiv (1) nach Anspruch 3, **dadurch gekennzeichnet, daß** das Bilderfassungselement (9) so außen am Gehäuse (2) befestigt ist, daß es die Lichtaustrittsöffnung abdeckt.

5. Mikroskopobjektiv (1) nach Anspruch 3, **dadurch gekennzeichnet, daß** eine Optikeinrichtung (26) zwischen dem Gehäuse (2) und dem Bilderfassungselement (27) vorgesehen ist.

6. Mikroskopobjektiv (1) nach einem der Ansprüche 1 bis 5, **dadurch gekennzeichnet, daß** außerhalb des Gehäuses (2) eine Auswerteeinrichtung (13) angeordnet ist, die mit vom Bilderfassungselement (9) erzeugten elektrischen Bildsignalen beaufschlagbar ist.

7. Mikroskopobjektiv (1) nach Anspruch 6, **dadurch gekennzeichnet, daß** die Auswerteeinrichtung (13) außen am Gehäuse (2) befestigt ist.

8. Mikroskopobjektiv (1) nach einem der Ansprüche 1 bis 7, **dadurch gekennzeichnet, daß** das Bilderfassungselement (9) mit dem Gehäuse (2) verbunden ist.

9. Mikroskopobjektiv (1) nach einem der Ansprüche 1 bis 8, **dadurch gekennzeichnet, daß** ein zweites Bilderfassungselement (27) und ein Strahlteiler (28) vorgesehen sind, wobei das über die Lichteintrittsöffnung (6) eintretende Licht in zwei Teilstrahlgänge so aufgeteilt wird, daß beide Bilderfassungselemente (27, 9) beleuchtet werden.

10. Mikroskopobjektiv (1) nach einem der Ansprüche 1 bis 9, **dadurch gekennzeichnet, daß** das Mikroskopobjektiv (1) zur Beleuchtung einer aufzunehmenden Probe (7) einen Dunkelfeldkanal (19) aufweist.

11. Mikroskopobjektiv (1) nach einem der Ansprüche 1 bis 10, **dadurch gekennzeichnet, daß** im Gehäuse (2) eine Lichtquelle (15; 16) vorgesehen ist.

12. Mikroskopobjektiv (1) nach Anspruch 11, **dadurch gekennzeichnet, daß** Licht einer Lichtquelle (15; 16) mittels zumindest eines Teils (10) des Optiksystems (8) über die Lichteintrittsöffnung (6) nach außen abgegeben werden kann.

13. Mikroskopobjektiv (1) nach einem der Ansprüche 1 bis 12, **dadurch gekennzeichnet, daß** das Bilderfassungselement (9) einen CCD-Bildsensor umfaßt.

14. Verwendung des Mikroskopobjektivs (1) nach einem der vorhergehenden Ansprüche bei einem Mikroskop mit einem Objektivhalter, an dem ein Beobachtungsobjektiv befestigt ist, und einer dem Objektivhalter nachgeordneten Beobachtungsoptik, in der über das Beobachtungsobjektiv aufgenommenes Probenlicht eingekoppelt wird, wenn mittels des Objektivhalters das Beobachtungsobjektiv in seiner Arbeitsstellung steht, wobei das Mikroskopobjektiv (1) mit dem Objektivhalter verbunden und mittels diesem in Arbeitsstellung bringbar ist.

## Claims

1. Microscope objective (1) comprising a housing (2), at the top side (3) of which a screw thread (4) is provided, by which screw thread (4) the microscope objective can be screw-connected to an objective mount of a microscope, and which comprises a light inlet opening (6), said objective further comprising an optical system (8) arranged inside the housing (2), **characterised in that** an image-detecting element (9; 27) is provided and that light entering through the light inlet opening (6) is directed to the image-detecting element (9; 27) by means of the optical system (8) and is not coupled into a beam path of the microscope, said beam path being located following the microscope objective (1).

2. Microscope objective (1) according to claim 1, **characterised in that** the image-detecting element (9) is arranged inside the housing (2).

3. Microscope objective (1) according to claim 1, **characterised in that** the housing (2) comprises a light outlet opening (25) and that the image-detecting element (27) is arranged outside the housing (2).

4. Microscope objective (1) according to claim 3, **characterised in that** the image-detecting element (9) is externally attached to the housing (2) in such a manner that it covers the light outlet opening.

5. Microscope objective (1) according to claim 3, **characterised in that** an optical device (26) is provided between the housing (2) and the image-detecting element (27).

6. Microscope objective (1) according to any one of claims 1 to 5, **characterised in that** an evaluating device (13) is arranged outside the housing (2), said device being able to receive electrical image signals generated by the image-detecting element (9).

7. Microscope objective (1) according to claim 6, **characterised in that** the evaluating device (13) is externally attached to the housing (2).

8. Microscope objective (1) according to any one of claims 1 to 7, **characterised in that** the image-detecting element (9) is connected to the housing (2).

9. Microscope objective (1) according to any one of claims 1 to 8, **characterised in that** a second image-detecting element (27) and a beam splitter (28) are provided, with the light entering through the light inlet opening (6) being split into two partial beam paths so as to illuminate both image-detecting elements (27, 9).

10. Microscope objective (1) according to any one of claims 1 to 9, **characterised in that** the microscope objective (1) comprises a dark field channel (19) for illuminating a specimen (7) to be photographed.

11. Microscope objective (1) according to any one of claims 1 to 10, **characterised in that** a light source (15; 16) is provided in the housing (2).

12. Microscope objective (1) according to claim 11, **characterised in that** light from a light source (15; 16) may be output by at least a part (10) of the optical system (8) through the light inlet opening (6).

13. Microscope objective (1) according to any one of claims 1 to 12, **characterised in that** the image-detecting element (9) comprises a CCD image sensor.

14. The use of the microscope objective (1) according to any one of the preceding claims in a microscope comprising an objective mount, to which an observing objective is attached, and an optical observing system which is arranged following the objective mount and wherein specimen light received via the observing objective is coupled into the optical observing system if the observing objective is arranged in its working position using the objective mount, the microscope objective (1) being connected to the objective mount and movable into working position by the latter.

## Revendications

1. Objectif de microscope (1) avec un boîtier (2) sur le côté supérieur (3) duquel un filetage de raccord (4) est prévu avec lequel l'objectif de microscope peut être vissé sur un support d'objectif d'un microscope, et qui comporte une ouverture d'admission de lumière (6), ainsi qu'un système d'optique (8) disposé dans le boîtier (2), **caractérisé en ce qu'**un élément de saisie d'image (9 ; 27) est prévu, et **en ce qu'**au moyen du système d'optique (8) la lumière entrant par l'ouverture d'admission de lumière (6) est dirigée sur l'élément de saisie d'image (9 ; 27) et n'est pas couplée dans un parcours optique du microscope suivant l'objectif de microscope (1).

2. Objectif de microscope (1) selon la revendication 1, **caractérisé en ce que** l'élément de saisie d'image (9) est disposé à l'intérieur du boîtier (2).

3. Objectif de microscope (1) selon la revendication 1, **caractérisé en ce que** le boîtier (2) comporte une ouverture de sortie de lumière (25) et **en ce que** l'élément de saisie d'image (27) est disposé à l'extérieur du boîtier (2).

4. Objectif de microscope (1) selon la revendication 3, **caractérisé en ce que** l'élément de saisie d'image (9) est fixé à l'extérieur contre le boîtier (2) de manière à recouvrir l'ouverture de sortie de lumière.

5. Objectif de microscope (1) selon la revendication 3, **caractérisé en ce qu'**un dispositif optique (26) est prévu entre le boîtier (2) et l'élément de saisie d'image (27).

6. Objectif de microscope (1) selon l'une des revendications 1 à 5,
**caractérisé en ce qu'**un dispositif d'exploitation (13) est disposé à l'extérieur du boîtier (2), auquel peuvent être adressés des signaux d'image électriques générés par l'élément de saisie d'image (9).

7. Objectif de microscope (1) selon la revendication 6, **caractérisé en ce que** le dispositif d'exploitation(13) est fixé à l'extérieur contre le boîtier (2).

8. Objectif de microscope (1) selon l'une des revendications 1 à 7, **caractérisé en ce que** l'élément de saisie d'image (9) est raccordé au boîtier (2).

9. Objectif de microscope (1) selon l'une des revendications 1 à 8, **caractérisé en ce qu'**un deuxième élément de saisie d'image (27) et un séparateur de faisceau (28) sont prévus, la lumière entrant par l'ouverture d'admission de lumière (6) étant séparée en deux faisceaux partiels de rayons de manière à éclairer les deux éléments de saisie d'image (27, 9).

10. Objectif de microscope (1) selon l'une des revendications 1 à 9, **caractérisé en ce que** l'objectif de microscope (1) comporte un canal à fond noir (19) pour l'éclairage d'un échantillon (7) à saisir.

11. Objectif de microscope (1) selon l'une des revendications 1 à 10, **caractérisé en ce qu'**une source lumineuse (15 ; 16) est prévue dans le boîtier (2).

12. Objectif de microscope (1) selon la revendication 11, **caractérisé en ce que** la lumière d'une source lumineuse (15 ; 16) peut être dirigée vers l'extérieur par l'ouverture d'admission de lumière (6) au moyen d'une pièce (10) au moins du système d'optique (8).

13. Objectif de microscope (1) selon l'une des revendications 1 à 12, **caractérisé en ce que** l'élément de saisie d'image (9) comprend un senseur d'image CCD.

14. Utilisation de l'objectif de microscope (1) selon l'une des revendications précédentes pour un microscope avec un support d'objectif sur lequel est fixé un objectif d'observation, et une optique d'observation succédant au support d'objectif, où une lumière d'échantillon captée par l'objectif d'observation est couplée quand l'objectif d'observation est amené dans sa position de travail au moyen du support d'objectif, l'objectif de microscope (1) étant raccordé au support d'objectif et pouvant être amené en position de travail au moyen de celui-ci.
